# EUROPEAN PATENT SPECIFICATION

(11) **EP 3 270 067 B1**
(45) Date of publication and mention of the grant of the patent: **19.08.2020**
(21) Application number: 17181303.3
(22) Date of filing: 13.07.2017
(51) Int. Cl.: F24D 13/02, F24D 19/10, H05B 3/28, H05B 3/56, H02H 5/12

(54) **ELECTRICAL APPARATUS**
ELEKTRISCHES GERÄT
APPAREIL ÉLECTRIQUE

(30) Priority: 13.07.2016 IT 201600073274
(43) Date of publication of application: 17.01.2018
(73) Proprietor: I.R.C.A. S.p.A. Industria Resistenze Corazzate e Affini, 31029 Vittorio Veneto (IT)
(72) Inventor: ZOPPAS, Federico, 31100 Treviso (IT); ZANELLA, Stefano, 31044 Montebelluna (IT); GIUSTO, Francesco, 30171 Mestre (IT); BIASI, Maurizio, 31043 Fontanelle (IT); CESTARO, Gianluca, Oriago - 30034 Mira (IT)
(74) Representative: Celona, Antonio

(56) References cited:
- WO-A1-2007/112770
- WO-A1-2011/015903
- JP-A- H1 163 541

## Description

### Field of the invention

The present invention relates to an electrical apparatus provided with electrical discharge protection means. In particular, it relates to an electrical apparatus comprising at least one outer metallic part, which may be touched by a person, which is disconnected from the ground conductor and which is subject to induced voltages.

### Prior art

The electrical apparatuses for residential use or the like are typically provided with means for protecting against electrical shock. Types of electrical apparatuses are well known to a person skilled in the art.

A first type of electrical apparatus envisages a protection against electrical shock which is not based on the main insulation only, but which also comprises an additional safety measure consisting of the connection of the accessible conductive parts to a ground conductor which is part of the fixed connections of the installation, so that the accessible conductive parts cannot become dangerous in case of failure of the main insulation.

A second type of electrical apparatus envisages a protection against electrical shock which is not based on the main insulation only, but also on additional safety measures consisting of double insulation or reinforced insulation; these measures exclude protective grounding and do not depend on installation conditions. The apparatuses of this second type are designed not to be connected to ground.

According to standard CEI EN 60335-1, the apparatuses of the first type are in Class I and the apparatuses of the second type are in Class II.

The apparatuses of the second type display disadvantages. In particular, since the electrical apparatus is not connected to ground, the metallic parts may lead to an electrical potential different from ground potential and, as a consequence, electrical discharges may occur towards people who touch one or more metallic parts of the apparatus when it is supplied by electrical current. This effect, although generally not dangerous, is certainly a drawback which is often not accepted by the market.

An example of electrical apparatuses of the second type is given by space heating panels or heaters. These apparatuses are provided with a metallic panel, e.g. made of aluminum, which transfers the heat produced by a resistive heating element. The resistive heating element is electrically insulated from the metallic panel, in particular the resistive element and the metallic panel are not in direct mutual contact. However, arranging the metallic panel near the resistive element with an insulating layer interposed between them forms an electrical capacitance. Substantially, it is a capacitor the armatures of which consist of the metallic panel and of the metallic resistive element.

The metallic panel is not connected to ground. Thus, disadvantageously, the generated capacitance makes the metallic panel carry a voltage comparable with the power supply voltage of the resistive element with respect to ground potential. Discharges to ground, which may be easily perceived by a human being who touches the metallic panel, the latter being an outer part of the heater which may be directly touched by people, are therefore possible.

The need is thus felt to overcome the aforesaid disadvantages of the prior art. In particular, the need is felt to overcome the disadvantages suffered by a specific class, or type, of electrical apparatuses having at least one outer metallic part which is under electrical voltage during operation of the electrical apparatus and which may be touched by people who, coming into contact with the metallic part, may perceive an electrical shock.

It is should be understood that another type of electrical apparatuses, such as for example the floor heater panel described in JPH1163541 A, is entirely free from these problems. Indeed, the metallic part of the heater panel which is used to distribute the heat described in JPH1163541A not only is completely covered with insulating material, but such metallic part is also connected to ground. Therefore, the heater panel described in JPH1163541A does not have metallic parts with which people may come into contact, and the metallic part is not under electrical voltage during the operation of the heater panel, because the latter is specifically designed so that such metallic part is connected to ground. JPH1163541A discloses an electric apparatus having the features of the preamble of claim 1.

WO2011015903A1 discloses an electronic device with protection circuit, and WO2007112770A1 discloses a discharge protection apparatus.

### Summary of the invention

It is an object of the present invention to provide an electrical apparatus designed not to be connected to ground, wherein the electrical discharges towards a person who touches a metallic part of the apparatus are reduced or canceled.

In particular, it is an object of the present invention to provide a solution which is constructively simple, specific for an electrical apparatus which is designed not to be connected to ground, which has at least one outer metallic part which may be touched by a person, wherein such metallic part is adapted to be under induced electrical voltage when the electrical apparatus is connected to the electrical power supply source. Such induced electrical voltage may cause electrical shocks when a person touches the outer metallic part and such electrical shocks are different from electrostatic discharges.

The present invention achieves these and other objects which will be apparent in light of the present description by providing an electrical apparatus adapted to be connected to an electrical voltage supply source,
the electrical apparatus comprising:
- at least one electrically conductive element destined to be connected to the electrical voltage supply source;
- at least one outer metallic part, which may be touched by a person, adapted to be under induced electrical voltage when the electrical apparatus is connected to the electrical voltage supply source;
- electrical discharge protection means fixed to the at least one outer metallic part; wherein the electrical apparatus is designed not to envisage any connection to ground,
wherein the electrical discharge protection means comprise at least one electrically insulating element and an electrical conductor,
wherein said at least one electrically insulating element is arranged between said electrical conductor and said at least one outer metallic part, so that said protection means are arranged so as to form a capacitor together with the at least one outer metallic part,
wherein the electrical discharge protection means are designed to be supplied by an electrical voltage offset with respect to the supply voltage of the electrical apparatus,

whereby the induced electrical voltage applied to the at least one metallic part is adapted to be either reduced or canceled.

According to an aspect, the electrical apparatus according to the invention is a space heater or radiator, e.g. a wall heater or a towel warmer.

Advantageously, by virtue of the invention, the induced electrical voltage resulting on the metallic part is very low and preferably is substantially either negligible or about equal to 0. Therefore, a person touching the metallic part during the operation of the heater will not receive any electrical shock, or will receive a very low or negligible electrical shock.

In the case of a space heater by way of example only, the voltage generated on the metallic panel can be appropriately reduced to acceptable values by applying another element (i.e. the protective means) to the metallic panel, in addition to the heating element, which other element comprises an electrical conductor insulated with respect to the metallic panel and which generates an adequate capacitance (e.g. equal to 50% of the capacitance generated by the heating element alone) and by supplying to this insulated electrical conductor an adequate alternating voltage (e.g. equal to the electrical power network voltage) appropriately offset with respect to the electrical power network voltage (e.g. in opposition).

Typically, but not exclusively, the voltage or electrical current or the voltages and the electrical currents to which reference is made are of the alternating type.

The dependent claims describe preferred embodiments of the invention.

### Brief description of the figures

Further features and advantages of the present invention will be more apparent in light of the detailed description of preferred, but not exclusive embodiments of an electrical apparatus. The description will be provided by way of non-limiting example, with reference to the accompanying drawings, also provided by way of non-limiting example, in which:
Fig. 1 shows a diagrammatic section view of a part of the heater of the invention;
Fig. 2 shows a diagrammatic perspective view of a component of the heater in Fig. 1;
Fig. 3 shows a diagrammatic perspective view of a component of the heater in Fig. 1;
Fig. 4 shows a diagrammatic perspective view of a component of the heater in Fig. 1;
Fig. 5 shows a diagrammatic view of a circuit diagram of the heater in Fig. 1.

The same references in the figures identify the same elements or components.

### Detailed description of a preferred embodiment of the invention

An electrical space heater, e.g. a wall heater or a towel warmer, is partially shown in the figures. The heater is adapted to be connected to an electrical supply voltage or differential potential source. Such electrical voltage supply source is preferably the electrical power network current. In other words, the electrical apparatus according to the invention is adapted to be connected to an electrical socket, e.g. a wall electrical outlet. The heater is designed not to be connected to ground, i.e. to be disconnected from the ground conductor of the component or of the electrical apparatus. In particular, the ground terminals and the ground contacts are not connected to the neutral terminal. Preferably, it is a Class II heater according to standard CEI EN 60335-1.

The heater comprises
- at least one electrically conductive element, in particular at least one heating element intended to be connected to the electrical voltage supply source;
- at least one outer metallic part, which may be touched by a person, in particular a metallic panel 12, adapted to be under induced electrical voltage when the heater is connected to the electrical voltage supply source, which is typically the electrical power network; and
- electrical discharge protection means 22.

The heating element may be a heating wire, e.g. a metallic wire 2, or may be of the flexible resistive sheet type, also known as flexible etched foil or may be of other type.

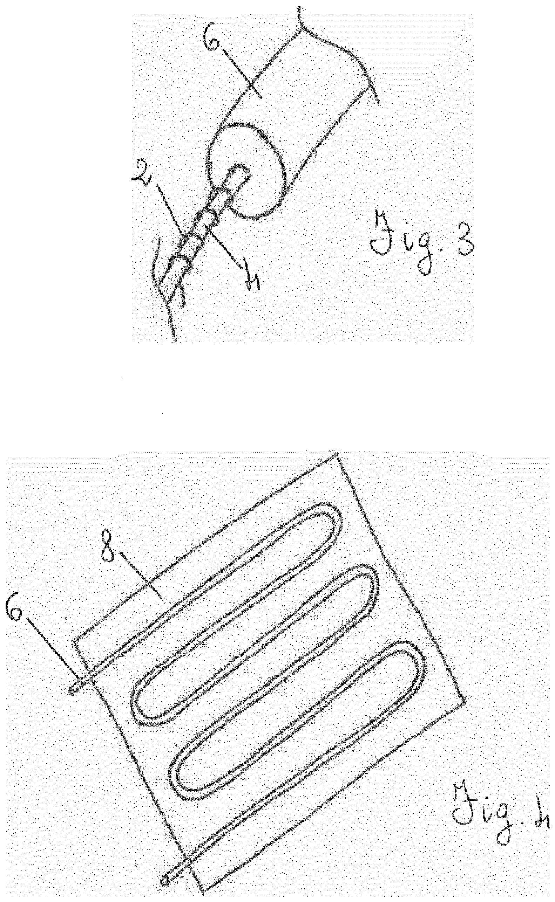

When it is used, the metallic wire 2 is wound, for example as a spiral, about a string 4, e.g. a string made of glass fiber (Fig. 3). The metallic wire 2 and the string 4 are incorporated in an electrically insulating sheath 6 or electrical insulator. For example, the sheath 6 is made of an elastomeric material, such as a silicone. Preferably, one end of the metallic wire 2 protrudes from the sheath 6, so that the metallic wire 2 may be connected to the electrical supply voltage or network voltage. Preferably, the sheath 6 is constrained to a sheet 8, or layer, made of heat-conductive material, e.g. a metal such as aluminum, and having a thickness equal to approximately 0.1 mm, for example. By way of example, the sheath 6 may be bent substantially in a serpentine shape (Fig. 4). The fixing between the sheath 6 and the metallic sheet 8 is preferably obtained by means of a double-sided adhesive tape. Preferably, the metallic sheet 8 substantially mimics the profile of at least part of the metallic wire 2 in the zones in which the metallic sheet 8 and the metallic wire 2 mutually correspond, e.g. are in mutual contact.

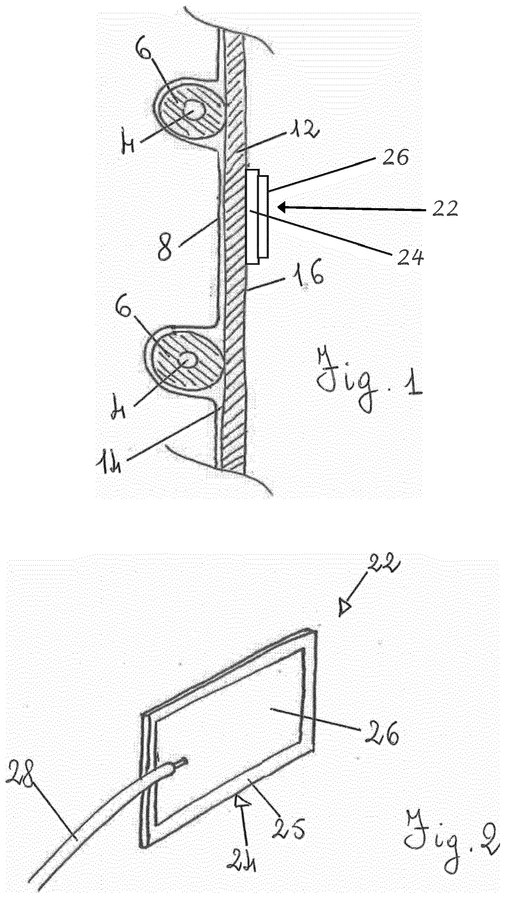

The metallic sheet 8, to which the sheath 6 in turn is fixed, is fixed, e.g. by means of adhesive means, such as a double-sided adhesive tape, to a face 14 of the metallic panel 12 of the space heater (Fig. 1). The metallic wire 2 is not in direct contact with the metallic panel 12.

The metallic panel 12 is not connected to ground, in particular is disconnected from the ground conductor.

The electrical discharge protection means 22 are designed to be powered by an electrical voltage offset with respect to the power supply voltage of the electrical apparatus. Preferably, the protection means 22 comprise at least one electrically insulating element, e.g. an insulating layer 24 and an electrical conductor or electrical conducting element, e.g. a metallic layer 26 (Fig. 2). The insulating layer 24 and the metallic layer 26 are mutually coupled. For example, the metallic layer 26 is fixed to a face 25 of the insulating layer 24. Preferably, the surface extension of the insulating layer 24 is greater than the surface extension of the metallic layer 26. The protection means 22 preferably also comprise at least one connection wire 28 for electrically connecting the metallic layer 26 to an electrical voltage source. Such electrical voltage source may be the same electrical voltage source 37 which supplies the metallic wire 2, or may be an electrical voltage source distinct from the electrical voltage source which supplies the metallic wire 2.

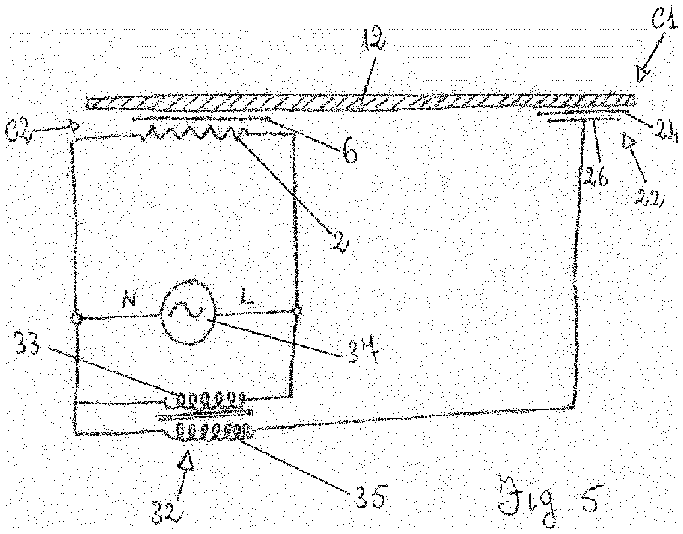

According to the invention, the protection means 22 are arranged so as to form a capacitor C1 (Fig. 5) together with the metallic panel 12. In particular, the arrangement of the protection means 22 is such that the insulating layer 24 is arranged between the metallic layer 26 and the metallic panel 12. Substantially, the capacitor C1 which is formed has the metallic layer 24 and the metallic panel 12, between which the insulating layer 26 is arranged, as conductor elements or armatures.

Preferably, the protection means 22 are coupled or fixed to the metallic panel 12. For example, the face of the insulating layer 24, opposite to the face 25, is fixed to the face 16 of the metallic panel 12, the face 16 being opposite to the face 14.

Alternatively, the protection means are coupled or fixed to the metallic sheet 8, preferably in manner similar to the previously described fixing to the metallic panel. In general, the protection means may optionally also comprise a further insulating layer, not shown, arranged on the metallic layer 26 so that the metallic layer 26 is arranged between two insulating layers.

Preferably, the protection means 22 cover only one portion of area, in particular of the outer face, of the at least one metallic part, which may be either the metallic panel 12 or the metallic sheet 8 (when provided). For example, the protection means 22 cover an area portion, in particular of the outer face, of the at least one metallic part, comprised between 0.25% and 10% of the area of the at least one metallic part, in particular of the area of the outer face of the metallic part.

The advantages of the invention may be better appreciated by means of a description of the operation of the heater.

The metallic wire 2 heats by Joule effect when the metallic wire 2 is supplied by an alternating electrical voltage source, i.e. a potential difference is applied to it. The heat generated by the metallic wire 2 is transferred to the sheet 6, which in turn transfers the heat to the metallic panel 12. The sheet 8 diffuses the heat in optimal manner.

Furthermore, when the metallic wire 2 is connected to an alternating electrical voltage source, the metallic panel 12 is subject to an induced voltage. Indeed, the construction is such that the metallic wire 2 and the metallic sheet 8 form a capacitor C2 (different from the capacitor C1 which comprises the protection means 22) with the metallic panel 12 (Fig. 5).

Substantially, in brief:
the capacitor C1 is formed by: metallic layer 26, insulating layer 24 and metallic panel 12.

The capacitor C2 is formed by: metallic wire 2, sheath 6 and metallic panel 12. Alternatively, when the sheet 8 is provided, the capacitor C2 is formed by: metallic wire 2 and sheet 8 (such two elements being a first armature), sheath 6, and metallic panel 12 (second armature).

In general terms,
the metallic layer 26 is an electrical conductor, to which an alternate electrical voltage is typically applied, which is offset with respect to the alternate electrical voltage applied to the metallic wire 2;
the insulating layer 24 is an electrically insulating element;
the metallic panel 12 is a metallic part accessible by a person, typically not connected to ground, and on which an induced electrical voltage is typically applied;
the metallic wire 2 and the sheet 8 (where envisaged) are electrically conductive elements (or multiple elements); and
the sheath 6 is an electrical insulator.

The aforesaid induced electrical voltage applied to the metallic panel 12 is reduced or canceled since the protection means 22 form a capacitor C1 together with the metallic panel 12, and since an electrical voltage offset with respect to the electrical voltage applied to the metallic wire 2 is applied to the protection means 22.

Fig. 5 diagrammatically shows a circuit diagram which makes it possible to obtain an electrical voltage applied to the protection means 22 which is offset, e.g. by 180°, with respect to the electrical voltage applied to the metallic wire 2. Note that some of the components described above are diagrammatically shown in Fig. 5. The heater comprises an electrical transformer 32. The transformer 32 comprises a primary connection circuit 33 and a secondary connection circuit 35. The primary circuit 33 is connected to the electrical voltage supply source 37, or generator. Such source may be, for example, an electrical current socket or any alternating current generator. The secondary circuit 35 is connected to the metallic layer 26 of the protection means 22. Preferably, the line L connection, or terminal, and the neutral N connection, or terminal, both connected to the primary circuit 33, branch from the electrical voltage supply source 37. Preferably, the metallic layer 26 is connected to one end of the secondary circuit 35 and the other end of the secondary circuit 35 is connected to the neutral terminal N of the electrical voltage source 37.

In this configuration, the electrical voltage applied to the metallic layer 26 is offset with respect to the voltage applied to the metallic wire 2 when the heater is supplied by the electrical voltage supply source 37. In other words, the metallic layer 26 is supplied by an alternating current or voltage which is offset with respect to the alternating current or voltage with which the metallic wire 2 is supplied.

Advantageously, by virtue of the invention, the electrical voltage resulting from the induced voltage and from such offset voltage is very low and preferably substantially negligible or about equal to 0. Therefore, a person touching the metallic panel 12 during the operation of the heater either will not receive any electrical shock or will receive a very low or negligible electrical shock.

After having provided a description of embodiments of the invention by way of example, the following clarifications are provided in order to prevent erroneous or limitative interpretations of the invention. In particular, although the invention has been described with respect to a space heater, it is apparent that the invention also refers to a different electrical apparatus. In particular, reference is also made to other electrical or electronic apparatuses which display metallic parts which do not discharge to ground (or which are not connected to ground) which could determine electrical shocks to people who touch such metallic parts. For example, it can be applied to a portable computer having a metallic casing, to a hair drier or other. Furthermore, the circuit diagram in Fig. 5 shows only an example of how an offset electrical voltage can be applied to the protection means 22.

## Claims

1. An electrical apparatus adapted to be connected to an electrical voltage supply source (37),
the electrical apparatus comprising:
- at least one electrically conductive element (2) destined to be connected to the electrical voltage supply source (37);
- at least one metallic part (8, 12) adapted to be under induced electrical voltage when the electrical apparatus is connected to the electrical voltage supply source (37);
- electrical discharge protection means (22) fixed to the at least one metallic part (8, 12);
wherein the electrical discharge protection means (22) comprise an electrical conductor (26),
whereby the induced electrical voltage applied to the at least one part (8, 12) is adapted to be either reduced or canceled;
**characterized in that**
the at least one metallic part (8, 12) is an outer metallic part which may be touched by a person;
the electrical apparatus is designed to have no connection to ground;
the electrical discharge protection means (22) comprise at least one electrically insulating element (24);
said at least one electrically insulating element (24) is arranged between said electrical conductor (26) and said at least one outer metallic part (8, 12), whereby said protection means (22) are arranged so as to form a capacitor (C1) together with said at least one outer metallic part (8, 12);
the electrical discharge protection means (22) are designed to be supplied by an electrical voltage which is offset with respect to the supply electrical voltage of the electrical apparatus.

2. An electrical apparatus according to claim 1, wherein said electrical discharge protection means (22) cover only a portion of area of the at least one outer metallic part (8, 12).

3. An electrical apparatus according to claim 2, wherein said electrical discharge protection means (22) cover a portion of area of the at least one outer metallic part (8, 12) comprised between 0.25% and 10% of the area of the at least one outer metallic part (8, 12).

4. An electrical apparatus according to any one of the preceding claims, wherein the at least one electrically insulating element (24) and the electrical conductor (26) of the protection means (22) are coupled to each other.

5. An electrical apparatus according to any one of the preceding claims, comprising an electrical transformer (32), wherein the electrical transformer (32) comprises a primary connection circuit (33) and a secondary connection circuit (35),
and wherein the primary circuit (33) is adapted to be connected to the electrical voltage supply source (37), and the secondary connecting circuit (35) is adapted to be connected on one side to the neutral terminal of the electrical voltage supply source (37) and on the other side to said electrical conductor (26) of the protection means (22), whereby when the electrical apparatus is supplied by the electrical voltage supply source (37), the electrical voltage applied to said electrical conductor (26) is offset with respect to the voltage applied to the at least one electrically conductive element (2).

6. An electrical apparatus according to any one of the preceding claims, wherein said at least one electrically conductive element (2) is surrounded by an electrical insulator (6) which insulates it from said at least one metallic part (12).

7. An electrical apparatus according to any one of the preceding claims, wherein said electrical apparatus is a space heater.

8. An electrical apparatus according to claim 7, wherein said at least one outer metallic part (8, 12) is destined to be heated by the heat generated by said at least one electrically conductive element (2) by Joule effect.

9. An electrical apparatus according to claim 7 or 8, wherein said outer metallic part comprises a metallic panel (12) and a metallic sheet (8) coupled to each other.

## Patentansprüche

1. Elektrische Vorrichtung, die geeignet ist, um an eine elektrische Spannungsquelle (37) angeschlossen zu werden,
wobei die elektrische Vorrichtung aufweist:
- zumindest ein elektrisch leitendes Element (2), das vorgesehen ist, um an die elektrische Spannungsquelle (37) angeschlossen zu werden;
- zumindest ein metallisches Bauteil (8, 12), das geeignet ist, um unter induzierter elektrischer Spannung zu stehen, wenn die elektrische Vorrichtung an die elektrische Spannungsquelle (37) angeschlossen ist;
- elektrische Entladungsschutzmittel (22), die an dem zumindest einen metallischen Bauteil (8, 12) befestigt sind;
wobei die elektrischen Entladungsschutzmittel (22) einen elektrischen Leiter (26) aufweisen, wodurch die induzierte elektrische Spannung, die an dem zumindest einem Bauteil (8, 12) angelegt ist, anpassbar ist, um entweder reduziert oder aufgehoben zu werden;
**dadurch gekennzeichnet, dass**
- das zumindest eine metallische Bauteil (8, 12) ein äußeres metallisches Bauteil ist, das von einer Person berührt werden kann;
- die elektrische Vorrichtung so ausgebildet ist, dass sie keine Verbindung zur Erde aufweist;
- die elektrischen Entladungsschutzmittel (22) zumindest ein elektrisch isolierendes Element (24) aufweisen;
- das zumindest eine elektrisch isolierende Element (24) zwischen dem elektrischen Leiter (26) und dem zumindest einen äußeren metallischen Bauteil (8, 12) angeordnet ist, wodurch die Schutzmittel (22) so angeordnet sind, dass sie zusammen mit dem zumindest einen äußeren metallischen Bauteil (8, 12) einen Kondensator (C1) ausbilden;
- die elektrischen Entladungsschutzmittel (22) ausgebildet sind, um von einer elektrischen Spannung versorgt zu werden, welche im Vergleich zur elektrischen Versorgungsspannung der elektrischen Vorrichtung verschoben ist.

2. Elektrische Vorrichtung nach Anspruch 1, wobei die elektrischen Entladungsschutzmittel (22) nur einen Teil einer Oberfläche des zumindest einen äußeren metallischen Bauteils (8, 12) bedecken.

3. Elektrische Vorrichtung nach Anspruch 2, wobei die elektrischen Entladungsschutzmittel (22) einen Teil der Oberfläche des zumindest einen äußeren metallischen Bauteils (8, 12) bedecken, der zwischen 0.25% und 10% der Oberfläche des zumindest einen äußeren metallischen Bauteil (8, 12) aufweist.

4. Elektrische Vorrichtung nach einem der vorhergehenden Ansprüche, wobei das zumindest eine elektrisch isolierende Element (24) und der elektrische Leiter (26) der Schutzmittel (22) miteinander gekoppelt sind.

5. Elektrische Vorrichtung nach einem der vorhergehenden Ansprüche, die einen elektrischen Transformator (32) aufweist, wobei der elektrische Transformator (32) einen ersten Anschlussschaltkreis (33) und einen zweiten Anschlussschaltkreis (35) aufweist, wobei
- der erste Anschlussschaltkreis (33) geeignet ist, an die elektrische Spannungsquelle (37) angeschlossen zu werden, und
- der zweite Anschlussschaltkreis (35) geeignet ist, an einer Seite an den Neutralleiter-Anschluss der elektrischen Spannungsquelle (37) und auf der anderen Seite an den elektrischen Leiter (26) der Schutzmittel (22) angeschlossen zu werden,
wodurch, wenn die elektrische Vorrichtung von der elektrischen Spannungsquelle (37) versorgt wird, die elektrische Spannung, die an dem elektrischen Leiter (26) angelegt ist, im Vergleich zu der Spannung, die an dem zumindest einen elektrisch leitenden Element (2) angelegt ist, verschoben ist.

6. Elektrische Vorrichtung nach einem der vorhergehenden Ansprüche, wobei das zumindest eine elektrisch leitende Element (2) von einer elektrischen Isolierung (6) umgeben ist, die es gegenüber dem zumindest einen metallischen Teil (12) isoliert.

7. Elektrische Vorrichtung nach einem der vorherigen Ansprüche, wobei die elektrische Vorrichtung eine Raumheizung ist.

8. Elektrische Vorrichtung nach Anspruch 7, wobei das zumindest eine äußere metallische Teil (8, 12) vorgesehen ist, um von der Wärme erwärmt zu werden, die von dem zumindest einen elektrisch leitenden Element (2) durch den Joule Effekt erzeugt wird.

9. Elektrische Vorrichtung nach Anspruch 7 oder 8, wobei das äußere metallische Teil eine metallische Blende (12) und ein metallisches Blech (8) aufweist, die miteinander gekoppelt sind.

## Revendications

1. Appareil électrique conçu pour être connecté à une source d'alimentation en tension électrique (37),
l'appareil électrique comprenant :
- au moins un élément électriquement conducteur (2) destiné à être connecté à la source d'alimentation en tension électrique (37) ;
- au moins une partie métallique (8, 12) conçue pour être sous une tension électrique induite lorsque l'appareil électrique est connecté à la source d'alimentation en tension électrique (37) ;
- des moyens de protection contre les décharges électriques (22) fixés à l'au moins une partie métallique (8, 12) ;
dans lequel les moyens de protection contre les décharges électriques (22) comprennent un conducteur électrique (26),
moyennant quoi la tension électrique induite appliquée à l'au moins une partie (8, 12) est conçue pour être soit réduite soit annulée ;
**caractérisé en ce que**
l'au moins une partie métallique (8, 12) est une partie métallique externe qui peut être touchée par une personne ;
l'appareil électrique est conçu pour n'avoir aucune connexion à la terre ;
les moyens de protection contre les décharges électriques (22) comprennent au moins un élément électriquement isolant (24) ;
ledit au moins un élément électriquement isolant (24) est agencé entre ledit conducteur électrique (26) et ladite au moins une partie métallique externe (8, 12), moyennant quoi lesdits moyens de protection (22) sont agencés de manière à former un condensateur (C1) conjointement avec ladite au moins une partie métallique externe (8, 12) ;
les moyens de protection contre les décharges électriques (22) sont élaborés pour être alimentés par une tension électrique qui est décalée par rapport à la tension électrique d'alimentation de l'appareil électrique.

2. Appareil électrique selon la revendication 1, dans lequel lesdits moyens de protection contre les décharges électriques (22) couvrent uniquement une fraction de surface de l'au moins une partie métallique externe (8, 12).

3. Appareil électrique selon la revendication 2, dans lequel lesdits moyens de protection contre les décharges électriques (22) couvrent une fraction de surface de l'au moins une partie métallique externe (8, 12) comprise entre 0,25 % et 10 % de la surface de l'au moins une partie métallique externe (8, 12).

4. Appareil électrique selon l'une quelconque des revendications précédentes, dans lequel l'au moins un élément électriquement isolant (24) et le conducteur électrique (26) des moyens de protection (22) sont couplés l'un à l'autre.

5. Appareil électrique selon l'une quelconque des revendications précédentes, comprenant un transformateur électrique (32), dans lequel le transformateur électrique (32) comprend un circuit de connexion primaire (33) et un circuit de connexion secondaire (35),
et dans lequel le circuit primaire (33) est conçu pour être connecté à la source d'alimentation en tension électrique (37), et le circuit de connexion secondaire (35) est conçu pour être connecté sur un côté à la borne neutre de la source d'alimentation en tension électrique (37) et sur l'autre côté audit conducteur électrique (26) des moyens de protection (22), moyennant quoi lorsque l'appareil électrique est alimenté par la source d'alimentation en tension électrique (37), la tension électrique appliquée audit conducteur électrique (26) est décalée par rapport à la tension appliquée à l'au moins un élément électriquement conducteur (2).

6. Appareil électrique selon l'une quelconque des revendications précédentes, dans lequel ledit au moins un élément électriquement conducteur (2) est encerclé par un isolant électrique (6) qui l'isole de ladite au moins une partie métallique (12).

7. Appareil électrique selon l'une quelconque des revendications précédentes, dans lequel ledit appareil électrique est un chauffage d'appoint.

8. Appareil électrique selon la revendication 8, dans lequel ladite au moins une partie métallique externe (8, 12) est destinée à être chauffée par la chaleur générée par ledit au moins un élément électriquement conducteur (2) par effet Joule.

9. Appareil électrique selon la revendication 8 ou 9, dans lequel ladite partie métallique externe comprend un panneau métallique (12) et une tôle métallique (8) couplés l'un à l'autre.
